# EUROPEAN PATENT SPECIFICATION

(11) **EP 3 666 533 B1**
(45) Date of publication and mention of the grant of the patent: **13.04.2022**
(21) Application number: 19212441.0
(22) Date of filing: 29.11.2019
(51) Int. Cl.: B41J 11/00, G03G 15/00, G03G 21/16

(54) **FIXING MEMBER AND IMAGE FORMING APPARATUS**
FIXIERVORRICHTUNG UND BILDERZEUGUNGSVORRICHTUNG
ÉLÉMENT DE FIXATION ET APPAREIL DE FORMATION D'IMAGES

(30) Priority: 30.11.2018 JP 2018224795
(43) Date of publication of application: 17.06.2020
(73) Proprietor: KYOCERA Document Solutions Inc., Osaka-shi, Osaka 540-8585 (JP)
(72) Inventor: YAMASAKI, Shunsuke, Osaka-shi, Osaka 540-8585 (JP)
(74) Representative: Viering, Jentschura & Partner mbB Patent- und Rechtsanwälte

(56) References cited:
- JP-A- H07 168 407
- US-A- 4 022 122

## Description

### BACKGROUND

The present disclosure relates to an image fanning apparatus.

An image forming apparatus includes a conveyance unit, a swinging body, and a fixing member. The fixing member is a bolt. The fixing member attaches the conveyance unit to the swinging body in a swingable manner. In transportation of the image forming apparatus, the bolt is fastened to render the conveyance unit immovable relative to the swinging body.

US 4,022,122 A discloses a pressing installation for use with a copying arrangement including a pair of opposed pressure rollers mounted on shafts mutually inclined toward one another with bearing blocks being provided for supporting the rollers and JP H07 168407 discloses an image forming device having an image recording unit and a paper feed cassette placed at a lower position of the image forming unit, the latter being detachable.

### SUMMARY

The present invention provides an image forming apparatus according to claim 1. Preferred embodiments are described in the dependent claims.

### BRIEF DESCRIPTION OF THE DRAWINGS

FIG. 1 is a diagram illustrating an inkjet recording apparatus according to an embodiment of the present disclosure.
FIG. 2 is a perspective view illustrating a fixing member in the embodiment.
FIG. 3 is a cross-sectional view illustrating the fixing member in the embodiment.
FIG. 4 is a perspective view illustrating a conveyance unit in the embodiment.
FIG. 5 is a perspective view illustrating a state in which the conveyance unit in the embodiment is located at an upper limit position and a state in which a cap unit and a wiper unit in the embodiment are located at a retraction position.
FIG. 6 is a perspective view illustrating a state in which the conveyance unit in the embodiment is located at a lower limit position and a state in which the cap unit and the wiper unit in the embodiment are located at the retraction position.
FIG. 7 is a perspective view illustrating a lifting and lowering unit in the embodiment.
FIG. 8 is an enlarged perspective view illustrating a support plate in the embodiment.
FIG. 9 is an exploded perspective view illustrating the fixing member in the embodiment.
FIG. 10 is a perspective view illustrating how to use the fixing member in the embodiment.
FIG. 11 is another perspective view illustrating how to use the fixing member in the embodiment.
FIG. 12 is a cross-sectional view illustrating a bottom plate and the fixing member in the embodiment.

### DETAILED DESCRIPTION

The following describes an inkjet recording apparatus 1 according to an embodiment of the present disclosure with reference to drawings. The inkjet recording apparatus 1 is an example of an image forming apparatus. Note that elements that are the same or equivalent are indicated by the same reference signs in the drawings and description thereof are not repeated. The drawings mainly illustrate respective elements in a schematic manner for easy understanding.

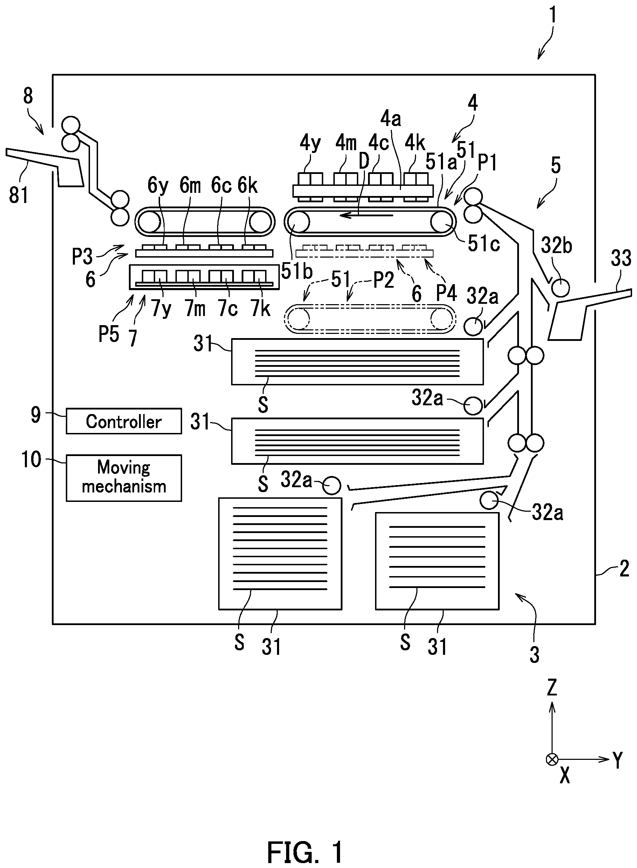

With reference to FIG. 1, the inkjet recording apparatus 1 according to the present embodiment is described. FIG. 1 is a diagram illustrating the inkjet recording apparatus 1 according to the present embodiment. An X axis, a Y axis, and a Z axis in the drawings are perpendicular to each other. The X axis and the Y axis each extend in a direction parallel to a horizontal direction, and the Z axis extends in a direction parallel to a vertical direction. A Y-axis direction is opposite to a conveyance direction D.

As illustrated in FIG. 1, the inkjet recording apparatus 1 includes a housing 2, a sheet feed section 3, a recording head section 4, a conveyance section 5, a cap unit 6, a wiper unit 7, an ejection section 8, a controller 9, and a moving mechanism 10. The housing 2 accommodates the sheet feed section 3, the recording head section 4, the conveyance section 5, the cap unit 6, the wiper unit 7, the ejection section 8, the controller 9, and the moving mechanism 10.

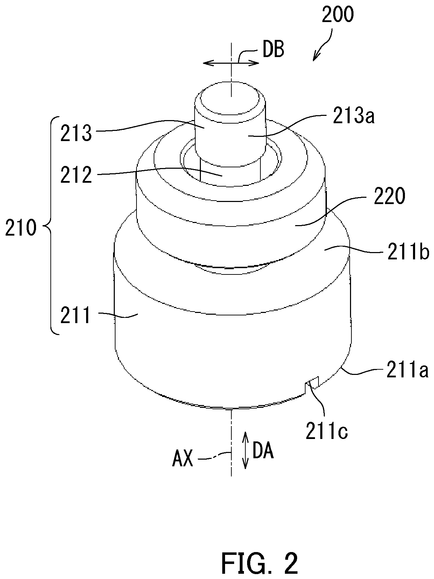

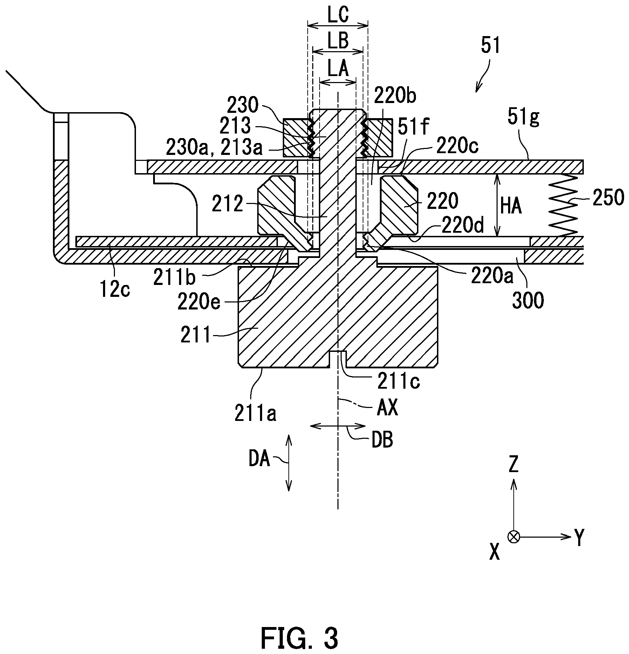

Next, a fixing member 200 in the embodiment is described with reference to FIGS. 2 and 3. FIG. 2 is a perspective view illustrating the fixing member 200. FIG. 3 is a cross-sectional view illustrating the fixing member 200. As illustrated in FIGS. 2 and 3, the inkjet recording apparatus 1 further includes the fixing member 200 and a nut member 230. In the embodiment, the inkjet recording apparatus 1 includes a plurality of fixing members 200 and a plurality of nut members 230. Each of the nut members 230 is attachable to a corresponding one of the fixing members 200. The fixing members 200 are used in transportation of the inkjet recording apparatus 1.

As illustrated in FIG. 1, the sheet feed section 3 includes sheet feed cassettes 31, sheet feed rollers 32a, a sheet feed roller 32b, and a manual feed tray 33. The sheet feed cassettes 31 are disposed in a lower part of the housing 2. The sheet feed cassettes 31 are detachably attached to the housing 2. In each of the sheet feed cassettes 31, a plurality of sheets S can be stored in a stacked state. A portion of the manual feed tray 33 is exposed from the housing 2 to the outside. On the manual feed tray 33, a plurality of sheets S can be loaded in a stacked state.

Each sheet S is, for example, plain paper, copy paper, recycled paper, thin paper, thick paper, glossy paper, or an overhead projector (OHP) sheet.

The sheet feed rollers 32a and the sheet feed roller 32b are pickup rollers. Each sheet feed roller 32a picks up the sheets S stored in the sheet feed cassette 31 one by one from the top. The sheet feed roller 32b picks up the sheets S loaded on the manual feed tray 33 one by one from the top. The sheet feed rollers 32a and the sheet feed roller 32b each feeds the picked sheet S to the conveyance section 5.

The conveyance section 5 conveys the sheet S along a conveyance path of the sheet S. The conveyance path of the sheet S extends from the sheet feed section 3 to the ejection section 8 via the recording head section 4. The conveyance section 5 includes a conveyance unit 51 and a plurality of roller pairs disposed along the conveyance path.

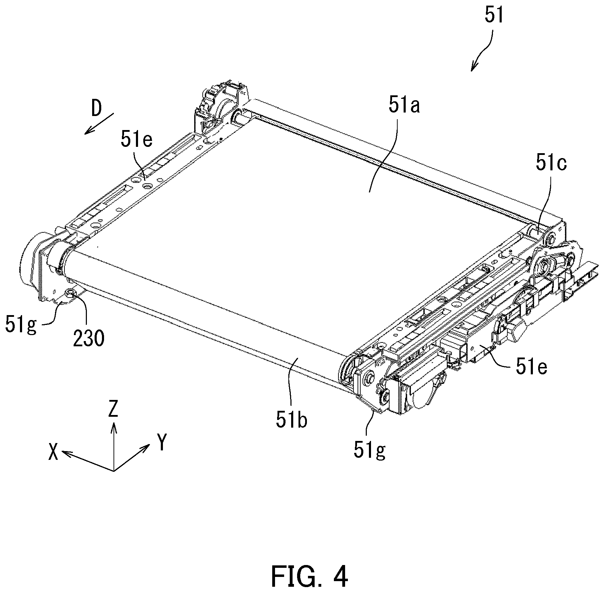

Next, with reference to FIG. 4, the conveyance unit 51 in the embodiment is described. FIG. 4 is a perspective view illustrating the conveyance unit 51. As illustrated in FIG. 4, the conveyance unit 51 conveys the sheet S in the conveyance direction D. The conveyance unit 51 includes a conveyor belt 51a, a driving roller 51b, a driven roller 51c, paired wall sections 51e, and paired bottom plates 51g. A driving roller 51b and a driven roller 51c are disposed between the paired wall sections 51e. The bottom plates 51g are each a plate parallel to a horizontal plane. The bottom plates 51g form the respective bottoms of the paired wall sections 51e.

The conveyor belt 51a is an endless belt. The conveyor belt 51a is stretched around the driving roller 51b and the driven roller 51c. The conveyance unit 51 conveys to the ejection section 8 the sheet S with it loaded on a loading surface. The loading surface means a part of an outer circumferential surface of the conveyor belt 51a on which the sheet S is to be loaded.

As illustrated in FIG. 3, each of the bottom plates 51g of the conveyance unit 51 includes a third hole 51f. In the embodiment, the bottom plate 51g includes a plurality of third holes 51f. Each of the third holes 51f penetrates the bottom plate 51g in an axial direction DA. The axial direction DA is, for example, substantially parallel to the vertical direction.

The nut member 230 is fixed to the bottom plate 51g. Specifically, the nut member 230 is fixed to the upper surface of the bottom plate 51g so as to overlap with the third hole 51f in the axial direction DA. That is, the nut member 230 is integral with the inkjet recording apparatus 1. Therefore, according to the embodiment, attachment of the fixing member 200 at a predetermined position can be achieved only by preparation of the fixing member 200.

The nut member 230 is an annular body. The nut member 230 is made from, for example, metal. The inner circumferential surface of the nut member 230 has a second female thread 230a. The second female thread 230a has an inner diameter of a second length LB and a root diameter of a third length LC. The second length LB is smaller than the third length LC.

As illustrated in FIG. 1, the recording head section 4 faces the loading surface of the conveyance unit 51. The recording head section 4 forms an image with ink on the sheet S being conveyed by the conveyance unit 51. Subsequently, the sheet S with the image formed thereon is sent to the ejection section 8.

The recording head section 4 includes a head housing 4a and recording heads 4y, 4m, 4c, and 4k. The recording heads 4y, 4m, 4c, 4k are held by the head housing 4a. The recording head 4y ejects a yellow ink. The recording head 4m ejects a magenta ink. The recording head 4c ejects a cyan ink. The recording head 4k ejects a black ink.

The ejection section 8 includes an exit tray 81. A portion of the exit tray 81 is exposed from the housing 2 to the outside. The sheet S with the image formed thereon is ejected onto the exit tray 81. Sheets S with an image formed thereon are stacked one by one on the exit tray 81.

The wiper unit 7 includes wiper blades 7y, 7m, 7c, and 7k. The wiper blades 7y, 7m, 7c, and 7k wipe off inks from the recording head section 4. The wiper blade 7y corresponds to the recording head 4y. The wiper blade 7m corresponds to the recording head 4m. The wiper blade 7c corresponds to the recording head 4c. The wiper blade 7k corresponds to the recording head 4k.

The cap unit 6 includes caps 6y, 6m, 6c, and 6k. The cap 6y corresponds to the recording head 4y. The cap 6m corresponds to the recording head 4m. The cap 6c corresponds to the recording head 4c. The cap 6k corresponds to the recording head 4k.

For example, the cap unit 6 brings the caps 6y, 6m, 6c, and 6k into close contact with the recording heads 4y, 4m, 4c, and 4k, respectively, when the recording head section 4 is not used for a specific time period or longer. As a result, drying of the inks of the recording heads 4y, 4m, 4c, and 4k is prevented.

The controller 9 controls operation of the inkjet recording apparatus 1. Specifically, the controller 9 includes a processor such as a central processing unit (CPU), and storage such as a hard disk drive and memory. The storage stores therein various computer programs to be executed by the processor. The processor executes the various computer programs stored in the storage to control the sheet feed section 3, the recording head section 4, the conveyance section 5, the cap unit 6, the wiper unit 7, and the moving mechanism 10.

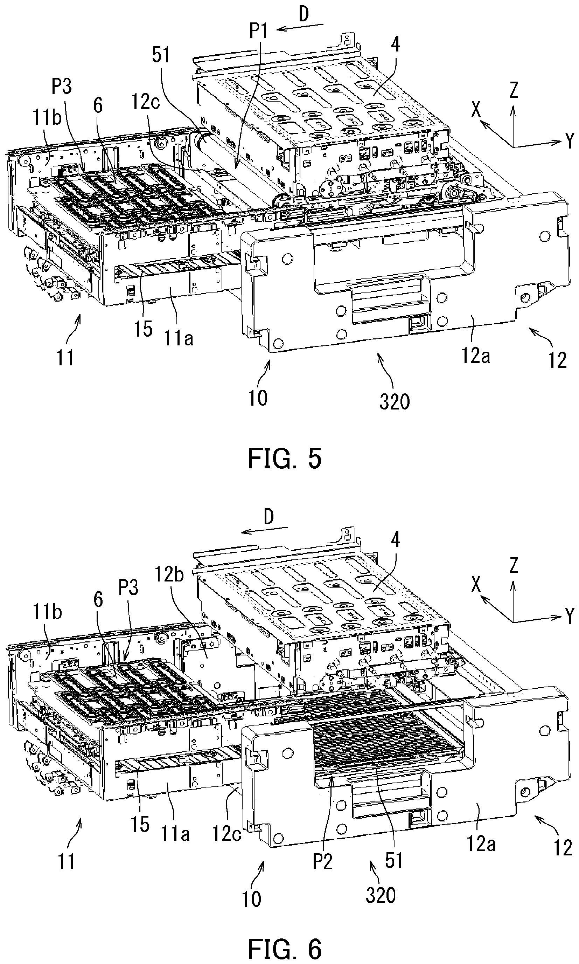

Next, with reference to FIGS. 5 to 6, movement of the conveyance unit 51, the cap unit 6, and the wiper unit 7 is described in detail. FIGS. 5 and 6 are perspective views illustrating the conveyance unit 51, the cap unit 6, and the wiper unit 7. In FIG. 5, the conveyance unit 51 is located at an upper limit position P1 and the cap unit 6 is located at a retraction position P3. In this state, the wiper unit 7 illustrated in FIG. 1 is located at a retraction position P5 although the wiper unit 7 is hidden behind the cap unit 6 in FIG. 5. In FIG. 6, the conveyance unit 51 is located at a lower limit position P2 and the cap unit 6 is located at the retraction position P3. In this state, the wiper unit 7 illustrated in FIG. 1 is located at a retraction position P5 although the wiper unit 7 is hidden behind the cap unit 6 in FIG. 5.

The upper limit position P1 is a position at which the conveyance unit 51 is close to the recording head section 4. The lower limit position P2 is a position which is vertically below the upper limit position P1 and at which the conveyance unit 51 is away from the recording head section 4. The retraction position P3 is a position to which the cap unit 6 is moved in the conveyance direction D relative to the recording head section 4. The retraction position P5 is a position which is vertically below the retraction position P3 and to which the wiper unit 7 is moved in the conveyance direction D relative to the recording head section 4.

As illustrated in FIGS. 5 to 6, the moving mechanism 10 moves the conveyance unit 51, the cap unit 6, and the wiper unit 7 within the housing 2. The moving mechanism 10 includes a first casing 11, a first casing moving mechanism 15, and a lifting and lowering unit 320.

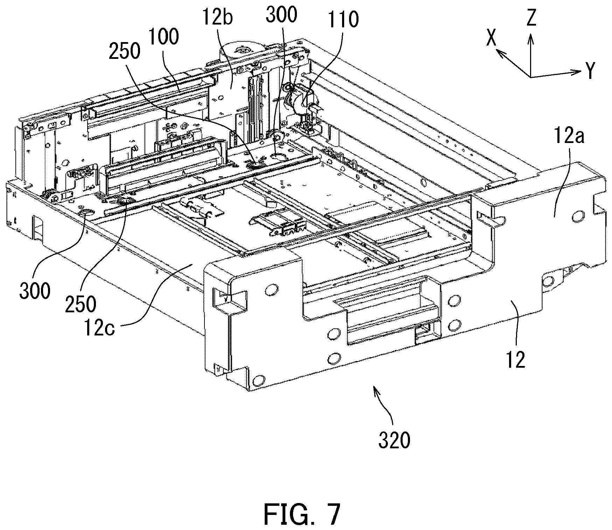

As illustrated in FIG. 7, the lifting and lowering unit 320 includes a second casing 12 and a conveyance unit moving mechanism (not illustrated). The second casing 12 is fixed to the housing 2. The second casing 12 includes a wall section 12a and a wall section 12b, and a support plate 12c parallel to the horizontal plane. The wall 12a and the wall 12b face each other in the X-axis direction. The conveyance unit 51 is placed on the support plate 12c.

As illustrated in FIG. 7, the conveyance unit moving mechanism moves, using a wire 100 and a drum 110, the conveyance unit 51 placed on the support plate 12c up and down between the upper limit position P1 and the lower limit position P2 in the second casing 12. The loading surface of the conveyance unit 51 at the upper limit position P1 faces the recording head section 4 in the vertical direction. At the upper limit position PI, the loading surface of the conveyance unit 51 is close to the lower end of the recording head section 4 at a clearance sufficient for conveyance of the sheet S (for example, 3 mm). By contrast, at the lower limit position P2, the clearance between the loading surface of the conveyance unit 51 and the lower end of the recording head section 4 is, for example, 200 mm.

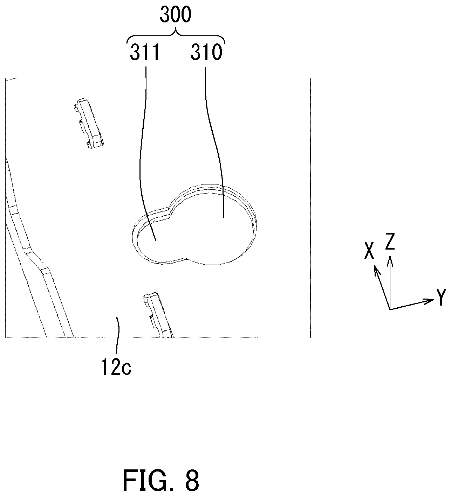

Next, with reference to FIGS. 7 and 8, the support plate 12c is described in detail. FIG. 8 is an enlarged perspective view illustrating a support plate 12c in the embodiment. As illustrated in FIGS. 7 and 8, the support plate 12c includes a plurality of (for example, four) elastic bodies 250 and a plurality of (for example, four) through holes 300. The elastic bodies 250 are disposed on the upper surface of the support plate 12c. For example, the four elastic bodies 250 are disposed at a corresponding one of the four corners of the upper surface of the support plate 12c. The conveyance unit 51 is placed on the support plate 12c with the elastic bodies 250 therebetween.

As illustrated in FIG. 3 and FIG. 8, the through hole 300 has a first hole portion 310 and a second hole portion 311. The first hole portion 310 and the second hole portion 311 penetrate the support plate 12c in the axial direction DA. The first hole portion 310 and the second hole portion 311 communicate with each other in a direction DB that intersects the axial direction DA. The first hole portion 310 and the second hole portion 311 communicate with each other in the direction DB that is perpendicular to the axial direction DA in the present embodiment. The second hole portion 311 is smaller than the first hole portion 310. The through hole 300 is located in a vicinity of each elastic body 250.

As illustrated in FIG. 5 and FIG. 6, the first casing 11 includes a wall section 11a and a wall section 11b. The wall section 11a and the wall section 11b face each other in the X-axis direction. The cap unit 6 and the wiper unit 7 are attached to the inside of the first casing 11.

The first casing moving mechanism 15 moves the cap unit 6 between the retraction position P3 and a standby position P4 (FIG. 1). The cap unit 6 at the standby position P4 faces the recording head section 4 in the vertical direction.

The first casing moving mechanism 15 moves the wiper unit 7 between the retraction position (indicated by solid lines in FIG. 1) and the standby position. The wiper unit 7 at the standby position faces the recording head section 4 in the vertical direction.

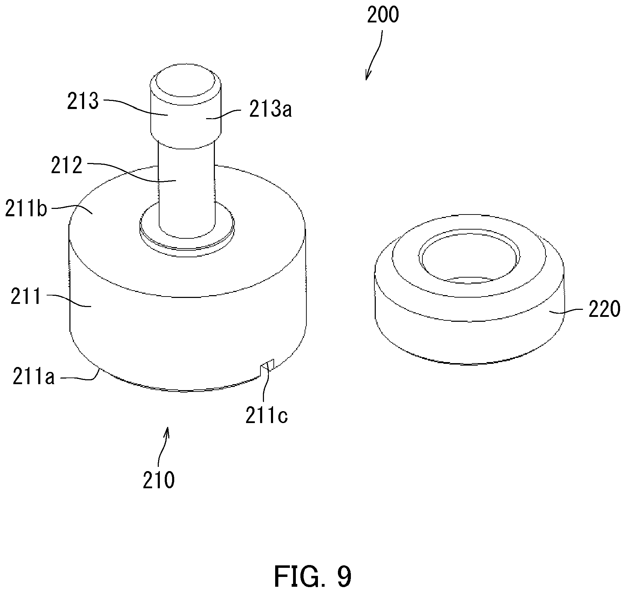

Next, with reference to FIGS. 2, 3, and 9, the fixing member 200 that is used in transportation of the inkjet recording apparatus 1 is described in detail. FIG. 9 is an exploded perspective view illustrating the fixing member 200. As illustrated in FIGS. 2, 3 and 9, the fixing member 200 includes the bolt member 210 and the spacer 220 annular in shape.

The bolt member 210 includes a base portion 211, a protruding portion 212, and a threaded portion 213. The bolt member 210 is made from, for example, metal.

The base portion 211 includes a base end surface 211a, a front end surface 211b, and an engaging part 211c. The base end surface 211a and the front end surface 211b each intersect the axial direction DA. In the embodiment, the base end surface 211a and the front end surface 211b are each perpendicular to the axial direction DA. The axial direction DA is a direction along an axis AX of the bolt member 210 passing through the threaded portion 213 and the base portion 211. The base end surface 211a is located at a position more distant from the threaded portion 213 than the front end surface 211b. The engaging part 211c is located in the base end surface 211a. The engaging part 211c engages with a tool. Since the engaging part 211c is located in the base end surface 211a, a user can use the tool from a side of the base end surface 211a. For example, in a configuration in which the nut member 230 is integral with the inkjet recording apparatus 1, the fixing member 200 can be easily attached to the nut member 230 using the tool.

The protruding portion 212 protrudes from the front end surface 211b of the base portion 211 in the axial direction DA. The protruding portion 212 has a diameter of the first length LA.

The threaded portion 213 is located at a tip of the protruding portion 212. The outer peripheral surface of the threaded portion 213 includes a male thread 213a. The root diameter of the male thread 213a is the second length LB longer than or equal to the first length LA. The outer diameter of the male thread 213a is the third length LC longer than the second length LB.

The spacer 220 annular in shape is made from, for example, metal. The spacer 220 is, for example, a ring, a square ring, or a hexagonal ring. The spacer 220 has a first abutment surface 220c and a second abutment surface 220d that are parallel to and face each other. The first abutment surface 220c forms an upper surface of a truncated cone. The central part of the second abutment surface 220d forms a protrusion 220e protruding in a truncated cone shape. In the central part of the first abutment surface 220c, a recess 220b is formed toward the second abutment surface 220d. A bottom surface of the recess 220b has a first female thread 220a penetrating toward the second abutment surface 220d side. The first female thread 220a has an inner diameter of the second length LB and a root diameter of the third length LC. A length HA in the thickness direction of the spacer 220 is a predetermined distance. The predetermined distance is a distance that is shorter than the natural length of the elastic body 250 and that inhibit plastic deformation of the elastic body 250. The natural length of the elastic body 250 is a length of the elastic body 250 free from any force applied thereto (not stretched or compressed).

The recess 220b extends in a direction from the threaded portion 213 toward the base portion 211. That is, the recess 220b is formed in the first abutment surface 220c of the spacer 220, which is the surface facing the threaded portion 213. The recess 220b has a predetermined size. Specifically, the recess 220b has a size large enough to receive the threaded portion 213.

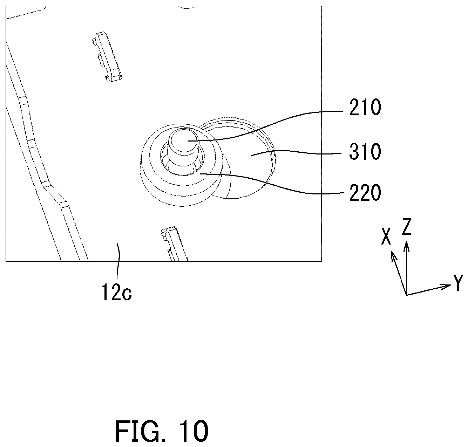

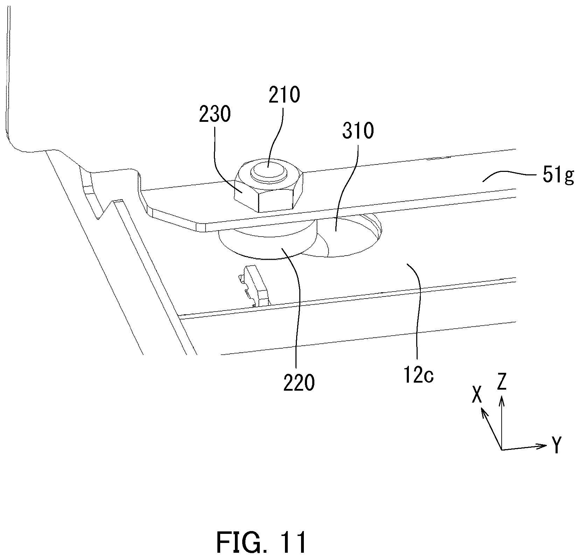

Next, with reference to FIGS. 3, 10, and 11, how to use the fixing member 200 for transportation of the inkjet recording apparatus 1 is described in detail. FIGS. 10 and 11 are each a perspective view illustrating how to use the fixing member 200 in the embodiment.

For transportation of the inkjet recording apparatus 1, the user prepares the bolt member 210 and the spacer 220 as illustrated in FIGS. 3, 10, and 11.

Next, the user attaches the spacer 220 to the protruding portion 212 of the bolt member 210. Specifically, the user first screws the spacer 220 onto the threaded portion 213 of the bolt member 210. After passing through the threaded portion 213, the spacer 220 is attached around the protruding portion 212. The inner diameter of the spacer 220 is the second length LB, and the diameter of the protruding portion 212 is the first length LA. That is, the spacer 220 is slidable on the protruding portion 212. The inner diameter of the spacer 220 is the second length LB, and the diameter of the threaded portion 213 is the third length LC. That is, the spacer 220 cannot be removed from the threaded portion 213 unless it is threadedly rotated. Therefore, in the embodiment, the spacer 220 can be attached to the protruding portion 212 in a slidable manner between the base portion 211 and the threaded portion 213.

Next, the user inserts the protruding portion 212 and the threaded portion 213 of the bolt member 210 with the spacer 220 from the lower side of the first hole portion 310 in the support plate 12c. The lower side means an opposite side of the support plate 12c to the bottom plate 51g. The size of the first hole portion 310 in the support plate 12c is such a size that the spacer 220 is allowed to pass therethrough but the base portion 211 is not. The size of the second hole portion 311 in the support plate 12c is such a size that neither the spacer 220 nor the base portion 211 is allowed to pass therethrough. The size of the second hole portion 311 is slightly larger than the outer diameter of the bottom surface of the protrusion 220e.

Next, the user moves the protruding portion 212 and the threaded portion 213 of the bolt member 210 with the spacer 220 in the direction DB from the first hole portion 310 to the second hole portion 311 in the support plate 12c. After the protruding portion 212, the threaded portion 213, and the spacer 220 are moved from the first hole portion 310 to the second hole portion 311 in the through hole 300, the spacer 220 inserted upward from the support plate 12c is prevented from falling downward off the support plate 12c. Therefore, for example, in a situation in which there is no work space on the bottom plate 51g due to the conveyor belt 51a being placed thereon, it is possible to pass the fixing member 200 through the support plate 12c to arrange the fixing member 200 in the vicinity of the bottom plate 51g as long as there is work space below the support plate 12c. Furthermore, the spacer 220 includes the protrusion 220e having a diameter smaller than that of the second hole portion 311 and protruding toward the second hole portion 311. Accordingly, the protrusion 220e is engaged with the second hole portion 311, and thus the spacer 220 is positioned so as not to move out of the second hole portion 311. Since the periphery of the first abutment surface 220c has a truncated cone shape, it is possible to prevent the periphery of the spacer 220 from interfering with the end of the bottom plate 51g.

Finally, the user inserts the threaded portion 213 of the bolt member 210 through the third hole 51f in the support plate 12c and screws the threaded portion 213 into the nut member 230. The user engages a tool with the engaging part 211c to screw the threaded portion 213 into the nut member 230. Since the engaging part 211c is located on the base end surface 211a, the user can use the tool from the side of the base end surface 211a. Therefore, in a situation in which there is no work space on the bottom plate 51g due to the conveyor belt 51a being placed thereon, the fixing member 200 can be attached to the nut member 230 as long as there is work space below the support plate 12c.

As a result of the threaded portion 213 screwed into the nut member 230, the support plate 12c is sandwiched between the base portion 211 and the spacer 220. The support plate 12c is an example of a first member. The bottom plate 51g is sandwiched between the spacer 220 and the nut member 230 threadedly engaged with the threaded portion. The bottom plate 51g is an example of a second member. The length of the elastic body 250 is kept at the predetermined length HA between the bottom plate 51g and the support plate 12c due to the presence of the spacer 220.

Therefore, according to the embodiment, due to the presence of the spacer 220 between the bottom plate 51g and the support plate 12c, the bottom plate 51g and the support plate 12c can be fixed with a space therebetween. When the elastic bodies 250 are arranged between the bottom plate 51g and the support plate 12c, the length of the elastic body 250 is kept at the predetermined length HA between the bottom plate 51g and the support plate 12c due to the presence of the spacer 220. Accordingly, plastic deformation of the elastic body 250 present between the bottom plate 51g and the support plate 12c can be inhibited. Further, the conveyance unit 51 can be prevented from being damaged.

Subsequently, how to bring the inkjet recording apparatus 1 into a state ready to use after transportation to a destination is described in detail.

First, the user engages the tool with the engaging part 211c to unscrew the threaded portion 213 of the bolt member 210 for detachment from the nut member 230. Since the engaging part 211c is located in the base end surface 211a, the user can use the tool from the side of the base end surface 211a. Therefore, in a situation in which there is no work space on the bottom plate 51g due to the conveyor belt 51a being placed thereon, the fixing member 200 can be detached as long as there is work space below the support plate 12c.

Next, the user pulls the base portion 211 downward to insert the threaded portion 213 of the bolt member 210 into the recess 220b of the spacer 220. Thus, the bolt member 210 previously located above the bottom plate 51g is retracted, and as a result, the bolt member 210 with the spacer 220 can be moved in the horizontal direction DB.

Next, the user moves the protruding portion 212 and the threaded portion 213 of the bolt member 210 with the spacer 220 in the direction DB from the second hole portion 311 to the first hole portion 310 in the support plate 11c. As a result of the movement of the protruding portion 212, the threaded portion 213, and the spacer 220 from the second hole portion 311 to the first hole portion 310 in the through hole 300, the spacer 220 that could not be pulled downward out of the support plate 12c can be pulled downward out of the support plate 12c.

Finally, the user pulls the base portion 211 downward to pull out the protruding portion 212 and the threaded portion 213 of the bolt member 210 with the spacer 220 through the first hole portion 310 in the support plate 12c. Therefore, in a situation in which there is no work space on the bottom plate 51g due to the conveyor belt 51a being placed thereon, the fixing member 200 can be collected as long as there is work space below the support plate 12c.

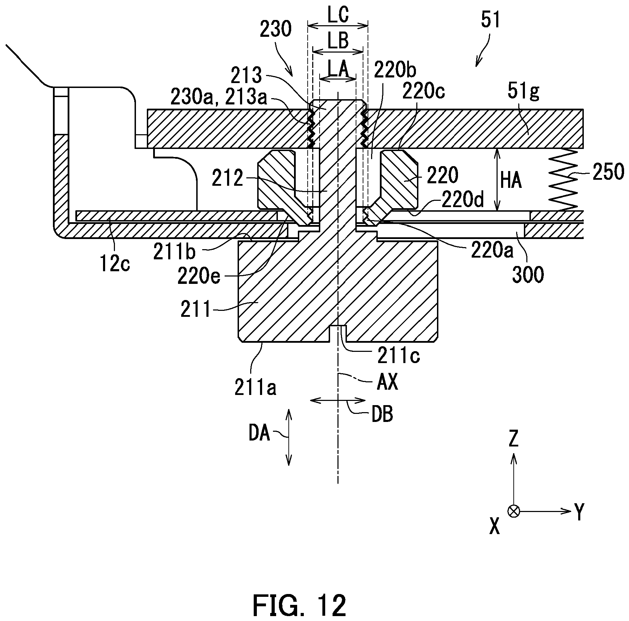

Hereinbefore, an embodiment of the present disclosure has been described with reference to the drawings. The drawings schematically illustrate elements of configuration in order to facilitate understanding, and properties of elements of configuration illustrated in the drawings, such as thicknesses, lengths, and numbers thereof, may differ from actual properties thereof in order to facilitate preparation of the drawings. Shapes, dimensions, and the like of the elements of configuration given in the above embodiment are merely examples that do not impose any particular limitations and may be altered within the scope as defined by the appended claims.
(1) As described with reference to FIGS.1 to11, the image forming apparatus is an inkjet recording apparatus 1. However, the present disclosure is not limited thereto. The image forming apparatus may be, for example, an electrophotographic recording apparatus or a monochrome multifunction peripheral.
(2) As described with reference to FIGS.1 toll, the nut member 230 is fixed to the bottom plate 51g. However, the present disclosure is not limited thereto. The nut member 230 does not need to be fixed to the bottom plate 51g. The nut member 230 may be a threaded hole 230a (a second female thread) as a result of processing on the bottom plate 51g. With reference to FIG. 12, the bottom plate 51g is described. FIG. 12 is a cross-sectional view illustrating the bottom plate 51g and the fixing member 200. As illustrated in FIG. 12, the bottom plate 51g has the second female thread 230a. The second female thread 230a functions as the nut member 230. That is, the nut member 230 and the bottom plate 51g are integral as a single member.

## Claims

1. An image forming apparatus comprising:
a conveyance unit (51) including a bottom plate (51g) and configured to convey a sheet,
a lifting and lowering unit (320) including an elastic body (250) and a support plate (12c), and configured to lift and lower the conveyance unit, the support plate supporting the conveyance unit with the elastic body therebetween,
a fixing member (200) configured to fix the conveyance unit to the lifting and lowering unit, and
a nut member (230) to be attached onto the fixing member, wherein
the fixing member includes:
a bolt member (210); and
a spacer (220) annular in shape,
the bolt member includes:
a base portion (211);
a protruding portion (212) protruding from the base portion; and
a threaded portion (213) located at a tip of the protruding portion,
the spacer is attached to the protruding portion in a slidable manner between the base portion and the threaded portion,
the support plate is sandwiched between the base portion and the spacer,
the bottom plate is sandwiched between the spacer and the nut member (230) threadedly engaged with the threaded portion, and
the length of the elastic body is maintained at a predetermined length due to the spacer between the bottom plate and the support plate.

2. The image forming apparatus according to claim 1, wherein
the support plate has a first hole portion (310) and a second hole portion (311) smaller than the first hole portion,
the first hole portion and the second hole portion each penetrate the support plate in an axial direction,
the axial direction is a direction along an axis of the bolt member passing through the threaded portion and the base portion,
the first hole portion and the second hole portion communicate with each other in a direction that intersects the axial direction,
the spacer is allowed to pass through the first hole portion and is not allowed to pass through the second hole portion, and
the base portion is not allowed to pass through neither of the first hole portion nor the second hole portion.

3. The image forming apparatus according to claim 2, wherein
the bottom plate has a third hole (51f), and
the nut member is fixed to the bottom plate so as to overlap with the third hole in the axial direction.

4. The image forming apparatus according to claim 2, wherein
the spacer includes a protrusion having a diameter smaller than that of the second hole portion and protruding toward the second hole portion.

5. The image forming apparatus according to claim 1, wherein
the bottom plate has a female thread, and
the female thread functions as the nut member.

6. The image forming apparatus according to any one of claims 1 to 5, wherein
the protruding portion has a diameter of a first length,
the threaded portion includes a male thread (213a),
the male thread has a root diameter of a second length longer than the first length and an outer diameter of a third length longer than the second length,
the spacer includes a first female thread (220a),
the first female thread of the spacer has an inner diameter of the second length and a root diameter of the third length,
the nut member includes a second female thread (230a), and
the second female thread of the nut member has an inner diameter of the second length and a root diameter of the third length.

7. The image forming apparatus according to claim 1 or 6, wherein
the spacer includes a recess (20b) extending from the threaded portion to the base portion, and
the threaded portion is capable of being received by the recess.

8. The image forming apparatus according to any one of claims 1 to 7, wherein
the base portion includes a base end surface (211a), a front end surface (211b), and an engaging part (211c), the engaging part being to be engaged with a tool,
the base end surface and the front end surface each intersect an axial direction,
the axial direction is a direction along an axis of the bolt member passing through the threaded portion and the base portion,
the base end surface is located at a position more distant from the threaded portion than the front end surface, and
the engaging part is located in the base end surface.

## Patentansprüche

1. Eine Bilderzeugungsvorrichtung, aufweisend:
eine Fördereinheit (51), die eine Bodenplatte (51g) aufweist und eingerichtet ist, um ein Blatt zu befördern,
eine Hebe- und Senkeinheit (320), die einen elastischen Körper (250) und eine Stützplatte (12c) aufweist und eingerichtet ist, um die Fördereinheit anzuheben und abzusenken, wobei die Stützplatte die Fördereinheit mit dem elastischen Körper dazwischen trägt,
ein Befestigungselement (200), das eingerichtet ist, um die Fördereinheit an der Hebe- und Senkeinheit zu befestigen, und
ein Mutterelement (230), das an dem Befestigungselement anzubringen ist, wobei
das Befestigungselement aufweist:
ein Schraubenelement (210) und
einen ringförmigen Abstandshalter (220),
wobei das Schraubenelement aufweist:
einen Basisabschnitt (211),
einen vorstehenden Abschnitt (212), der von dem Basisabschnitt aus vorsteht, und
einen Gewindeabschnitt (213), der an einer Spitze des vorstehenden Abschnitts angeordnet ist,
wobei der Abstandshalter an dem vorstehenden Abschnitt in einer verschiebbaren Weise zwischen dem Basisabschnitt und dem Gewindeabschnitt angebracht ist,
die Stützplatte zwischen dem Basisabschnitt und dem Abstandshalter angeordnet ist,
die Bodenplatte zwischen dem Abstandshalter und dem Mutterelement (230) angeordnet ist, das mit dem Gewindeabschnitt in Gewindeeingriff steht, und
die Länge des elastischen Körpers aufgrund des Abstandshalters zwischen der Bodenplatte und der Stützplatte auf einer vorbestimmten Länge gehalten wird.

2. Die Bilderzeugungsvorrichtung gemäß Anspruch 1, wobei
die Stützplatte einen ersten Lochabschnitt (310) und einen zweiten Lochabschnitt (311) aufweist, der kleiner ist als der erste Lochabschnitt,
der erste Lochabschnitt und der zweite Lochabschnitt die Stützplatte jeweils in einer Axialrichtung durchdringen,
die Axialrichtung eine Richtung entlang einer Achse des Schraubenelements ist, die durch den Gewindeabschnitt und den Basisabschnitt verläuft,
der erste Lochabschnitt und der zweite Lochabschnitt in einer Richtung miteinander in Verbindung stehen, die die Axialrichtung schneidet,
der Abstandshalter durch den ersten Lochabschnitt hindurchtreten kann und durch den zweiten Lochabschnitt nicht hindurchtreten kann, und
der Basisabschnitt weder durch den ersten Lochabschnitt noch durch den zweiten Lochabschnitt hindurchtreten kann.

3. Die Bilderzeugungsvorrichtung gemäß Anspruch 2, wobei
die Bodenplatte ein drittes Loch (51f) aufweist und
das Mutterelement so an der Bodenplatte befestigt ist, dass es mit dem dritten Loch in Axialrichtung überlappt.

4. Die Bilderzeugungsvorrichtung gemäß Anspruch 2, wobei
der Abstandshalter einen Vorsprung mit einem kleineren Durchmesser als dem des zweiten Lochabschnitts aufweist und in Richtung des zweiten Lochabschnitts vorsteht.

5. Die Bilderzeugungsvorrichtung gemäß Anspruch 1, wobei
die Bodenplatte ein Innengewinde aufweist und
das Innengewinde als das Mutterelement fungiert.

6. Die Bilderzeugungsvorrichtung gemäß einem der Ansprüche 1 bis 5, wobei
der vorstehende Abschnitt einen Durchmesser einer ersten Länge hat,
der Gewindeabschnitt ein Außengewinde (213a) aufweist,
das Außengewinde einen Kerndurchmesser einer zweiten Länge, die länger ist als die erste Länge, und einen Außendurchmesser einer dritten Länge hat, die länger ist als die zweite Länge,
der Abstandshalter ein erstes Innengewinde (220a) aufweist,
das erste Innengewinde des Abstandshalters einen Innendurchmesser der zweiten Länge und einen Kerndurchmesser der dritten Länge hat,
das Mutterelement ein zweites Innengewinde (230a) aufweist und
das zweite Innengewinde des Mutterelements einen Innendurchmesser der zweiten Länge und einen Kerndurchmesser der dritten Länge hat.

7. Die Bilderzeugungsvorrichtung gemäß Anspruch 1 oder 6, wobei
der Abstandshalter eine Aussparung (20b) aufweist, die sich von dem Gewindeabschnitt zu dem Basisabschnitt erstreckt, und
der Gewindeabschnitt in der Lage ist, von der Aussparung aufgenommen zu sein.

8. Die Bilderzeugungsvorrichtung gemäß einem der Ansprüche 1 bis 7, wobei
der Basisabschnitt eine Basisendfläche (211a), eine vordere Endfläche (211b) und einen Eingriffsteil (211c) aufweist, wobei der Eingriffsteil mit einem Werkzeug in Eingriff bringbar ist,
die Basisendfläche und die vordere Endfläche jeweils eine Axialrichtung schneiden,
die Axialrichtung eine Richtung entlang einer Achse des Schraubenelements ist, die durch den Gewindeabschnitt und den Basisabschnitt verläuft,
die Basisendfläche an einer Position angeordnet ist, die von dem Gewindeabschnitt weiter entfernt ist als die vordere Endfläche, und
der Eingriffsteil in der Basisendfläche angeordnet ist.

## Revendications

1. Appareil de formation d'image comprenant :
une unité transport (51) qui comprend une plaque inférieure (51g), et qui est configurée pour transporter une feuille,
une unité levage et abaissement (320) qui comprend un corps élastique (250) et une plaque de support (12c), et qui est configurée pour lever et abaisser l'unité transport, la plaque de support supportant l'unité transport, le corps élastique étant situé entre,
un élément fixation (200), configuré pour fixer l'unité transport sur l'unité levage et abaissement, et
un élément écrou (230) destiné à être fixé sur l'élément fixation, dans lequel l'élément fixation comprend :
un élément boulon (210) ; et
une entretoise (220) de forme annulaire,
l'élément boulon comprend :
une partie base (211) ;
une partie saillante (212) qui fait saillie à partir de la partie base ; et
une partie filetée (213) située au niveau d'une extrémité de la partie saillante,
l'entretoise est fixée sur la partie saillante de façon coulissante entre la partie base et la partie filetée,
la plaque de support est prise en sandwich entre la partie base et l'entretoise,
la plaque inférieure est prise en sandwich entre l'entretoise et l'élément écrou (230) mis en prise de manière filetée avec la partie filetée, et
la longueur du corps élastique est maintenue à une longueur prédéterminée en raison de la présence de l'entretoise entre la plaque inférieure et la plaque de support.

2. Appareil de formation d'image selon la revendication 1, dans lequel
la plaque de support présente une première partie trou (310) et une deuxième partie trou (311) plus petite que la première partie trou,
la première partie trou et la deuxième partie trou pénètrent chacune dans la plaque de support dans une direction axiale,
la direction axiale est la direction le long de l'axe de l'élément boulon qui passe par la partie filetée et la partie base,
la première partie trou et la deuxième partie trou communiquent l'une avec l'autre dans une direction qui coupe la direction axiale,
l'entretoise a la possibilité de passer à travers la première partie trou, et n'a pas la possibilité de passer à travers la deuxième partie trou, et
la partie base n'a la possibilité de passer ni à travers la première partie trou ni à travers la deuxième partie trou.

3. Appareil de formation d'image selon la revendication 2, dans lequel
la plaque inférieure présente un troisième trou (51f), et
l'élément écrou est fixé sur la plaque inférieure afin de chevaucher le troisième trou dans la direction axiale.

4. Appareil de formation d'image selon la revendication 2, dans lequel
l'entretoise comprend une saillie qui présente un diamètre inférieur à celui de la deuxième partie trou, et qui fait saillie vers la deuxième partie trou.

5. Appareil de formation d'image selon la revendication 1, dans lequel
la plaque inférieure présente un filetage femelle, et le filetage femelle se comporte comme l'élément écrou.

6. Appareil de formation d'image selon l'une quelconque des revendications 1 à 5, dans lequel
la partie saillante présente un diamètre d'une première longueur,
la partie filetée comprend un filetage mâle (213a),
le filetage mâle présente un diamètre de racine d'une deuxième longueur plus longue que la première longueur, et un diamètre extérieur d'une troisième longueur plus longue que la deuxième longueur,
l'entretoise comprend un premier filetage femelle (220a),
le premier filetage femelle de l'entretoise présente un diamètre intérieur de la deuxième longueur, et un diamètre de racine de la troisième longueur,
l'élément écrou comprend un deuxième filetage femelle (230a), et
le deuxième filetage femelle de l'élément écrou présente un diamètre intérieur de la deuxième longueur, et un diamètre de racine de la troisième longueur.

7. Appareil de formation d'image selon l'une quelconque des revendications 1 à 6, dans lequel
l'entretoise comprend un renfoncement (20b) qui s'étend à partir de la partie filetée vers la partie base, et
la partie filetée peut être reçue par le renfoncement.

8. Appareil de formation d'image selon l'une quelconque des revendications 1 à 7, dans lequel
la partie base comprend une surface d'extrémité de base (211a), une surface d'extrémité avant (211b), et une partie de mise en prise (211c), la partie de mise en prise devant être mis en prise avec un outil,
la surface d'extrémité de base et la surface d'extrémité avant coupent chacune une direction axiale,
la direction axiale est la direction le long de l'axe de l'élément boulon qui passe par la partie filetée et la partie base,
la surface d'extrémité de base se situe au niveau d'une position plus éloignée de la partie filetée que la surface d'extrémité avant, et la partie de mise en prise se situe dans la surface d'extrémité de base.
